# FASCICULE DE BREVET EUROPEEN

(11) **EP 4 228 070 B1**
(45) Date de publication et mention de la délivrance du brevet: **22.04.2026**
(21) Numéro de dépôt: 22305147.5
(22) Date de dépôt: 10.02.2022
(51) Int. Cl.: H01M 50/209, H01M 50/503, H01M 50/514

(54) **ENSEMBLE D'INTERCONNEXION ÉLASTIQUE DE CELLULES ÉLECTROCHIMIQUES ET PROCÉDÉ D'INSTALLATION ASSOCIÉ**
EINHEIT ZUR ELASTISCHEN VERBINDUNG VON ELEKTROCHEMISCHEN ZELLEN UND ENTSPRECHENDES INSTALLATIONSVERFAHREN
ASSEMBLY FOR ELASTIC INTERCONNECTION OF ELECTROCHEMICAL CELLS AND METHOD FOR INSTALLING SAME

(43) Date de publication de la demande: 16.08.2023
(73) Titulaire: Automotive Cells Company SE, 33520 Bruges (FR)
(72) Inventeur: ARDRINO, Thomas, 33320 Eysines (FR); DE ROLAND, Geoffroy, 33520 Bruges (FR)
(74) Mandataire: Lavoix

(56) Documents cités:
- US-A1- 2010 021 810
- US-A1- 2016 126 524

## Description

La présente invention concerne un ensemble d'interconnexion de cellules électrochimiques.

L'invention s'applique particulièrement à la fabrication de batteries de véhicules électriques ou hybrides.

Une cellule électrochimique comprend un électrolyte reçu dans une enveloppe externe fermée, en général de forme sensiblement parallélépipédique. La cellule électrochimique comprend généralement des bornes en contact avec l'électrolyte et fixées à l'enveloppe externe, à l'extérieur de ladite enveloppe.

Par exemple, la cellule électrochimique comprend un empilement d'électrodes positives reliées les unes aux autres et un empilement d'électrodes négatives reliées les unes aux autres, séparés par un séparateur. Un tel assemblage, connu sous le terme « stack », est reçu dans l'enveloppe externe.

Il est connu d'assembler, en série et/ou en parallèle, une pluralité de cellules électrochimiques afin de réaliser des modules électriques, à l'aide d'un dispositif d'interconnexion assurant un contact électrique entre les bornes de deux cellules voisines.

Il est connu de l'état de la technique, par exemple des documents US 2016/126524 A1 et US 2010/021810 A1, de relier des cellules de batterie adjacentes au moyen des dispositifs d'interconnexion métalliques rigides qui sont fixés de manière permanente, par exemple par déformation, soudage ou collage.

Cette méthode ne permet pas le démontage non destructif de l'ensemble en dissociant les cellules.

Des systèmes démontables sont également connus mais n'offrent pas de résultats suffisants en termes de tenue mécanique ou de transmission de puissance électrique.

La présente invention a pour but de résoudre ces problèmes et de proposer un ensemble d'interconnexion simple à installer et à désinstaller, sans nécessiter de matériel coûteux.

A cet effet, l'invention a pour objet un ensemble d'interconnexion du type précité, comprenant une première et une deuxième cellules électrochimiques, chacune desdites première et deuxième cellules comprenant une enveloppe externe et au moins une borne disposée à l'extérieur de l'enveloppe externe selon un axe ; ledit ensemble comprenant en outre un dispositif d'interconnexion, comportant un premier et un deuxième éléments d'interconnexion ; chacun desdits premier et deuxième éléments d'interconnexion comprenant une surface de fixation et une surface de contact. La surface de fixation de chacun des premier et deuxième éléments d'interconnexion est apte à être fixée à la borne, respectivement de la première et de la deuxième cellules, dans une configuration installée de l'ensemble d'interconnexion ; de sorte que, dans ladite configuration installée, les surfaces de contact des premier et deuxième éléments d'interconnexion exercent l'une sur l'autre un effort selon une direction d'assemblage des première et deuxième cellules, la direction d'assemblage étant sensiblement perpendiculaire à l'axe de l'au moins une borne, le dispositif d'interconnexion assurant ainsi une connexion électrique entre les première et deuxième cellules; et les surfaces de contact sont configurées de sorte que, dans ladite configuration installée, lesdites surfaces de contact soient sensiblement disposées dans un plan formant un angle contraint avec ladite direction d'assemblage, ledit angle contraint étant compris entre 45° et 85°.

Suivant d'autres aspects avantageux de l'invention, l'ensemble d'interconnexion comporte l'une ou plusieurs des caractéristiques suivantes, prises isolément ou suivant toutes les combinaisons techniquement possibles :
- la zone de liaison de l'au moins un des premier et deuxième éléments d'interconnexion comprend en outre une troisième partie recourbée, consécutive à la deuxième partie, les deuxième et troisième parties présentant des concavités opposées l'une à l'autre ;
- la borne d'au moins l'une des première et deuxième cellules présente une surface terminale sensiblement perpendiculaire à l'axe ; et la surface de fixation d'au moins l'un des premier et deuxième éléments d'interconnexion est configurée pour épouser ladite surface terminale dans la configuration installée ;
- la borne d'au moins l'une des première et deuxième cellules forme une saillie par rapport à l'enveloppe externe selon l'axe et comprend une surface latérale, parallèle audit axe ; et la surface de fixation d'au moins l'un des premier et deuxième éléments d'interconnexion est configurée pour épouser ladite surface latérale dans la configuration installée ;
- dans une configuration dissociée dudit ensemble, en l'absence d'effort entre les premier et deuxième éléments d'interconnexion, chaque surface de contact est sensiblement disposée dans un plan formant un angle non contraint avec la surface de fixation correspondante, ledit angle non contraint étant compris entre 45° et 85°, ledit angle non contraint étant inférieur ou égal à l'angle contraint.

L'invention se rapporte en outre à un procédé d'assemblage de l'ensemble d'interconnexion décrit ci-dessus, comprenant les étapes suivantes : fixation de la surface de fixation de chacun des premier et deuxième éléments d'interconnexion du dispositif d'interconnexion, à la borne, respectivement de la première et de la deuxième cellules ; puis rapprochement des première et deuxième cellules selon la direction d'assemblage, de sorte que les surfaces de contact des premier et deuxième éléments d'interconnexion entrent en contact et exercent l'une sur l'autre un effort selon la direction d'assemblage.

Suivant d'autres aspects avantageux de l'invention, le procédé comporte l'une ou plusieurs des caractéristiques suivantes :
- l'effort entre les surfaces de contact induit une déformation élastique de la zone de liaison de l'au moins un des premier et deuxième éléments d'interconnexion ;
- la fixation de la surface de fixation sur la borne est effectuée par soudage ou brasage.

L'invention se rapporte en outre à un organe électrique, de type module ou batterie, comprenant : une première et une deuxième cellules électrochimiques ; et un dispositif d'interconnexion ; chacune desdites première et deuxième cellules comprenant une enveloppe externe et une borne disposée à l'extérieur de l'enveloppe externe selon un axe ;
le dispositif d'interconnexion, comportant un premier et un deuxième éléments d'interconnexion ; chacun desdits premier et deuxième éléments d'interconnexion comprenant une surface de fixation et une surface de contact,
la surface de fixation de chacun des premier et deuxième éléments d'interconnexion étant fixée à la borne, respectivement de la première et de la deuxième cellules ; les surfaces de contact des premier et deuxième éléments d'interconnexion exerçant l'une sur l'autre un effort selon une direction d'assemblage des première et deuxième cellules, la direction d'assemblage étant sensiblement perpendiculaire à l'axe de la borne, le dispositif d'interconnexion assurant ainsi une connexion électrique entre les première et deuxième cellules ;
les surfaces de contact étant sensiblement disposées dans un plan formant un angle contraint avec ladite direction d'assemblage, ledit angle contraint étant compris entre 45° et 85° ;
l'organe électrique étant susceptible d'être issu d'un procédé tel que décrit ci-dessus.

L'invention se rapporte en outre à un véhicule électrique comprenant un tel organe électrique.

L'invention sera mieux comprise à la lecture de la description qui va suivre, donnée uniquement à titre d'exemple non limitatif et faite en se référant aux dessins sur lesquels :
- la figure 1 est une vue partielle, en perspective, d'un ensemble d'interconnexion selon un premier mode de réalisation de l'invention, dans une première configuration ;
- la figure 2 est une vue latérale d'éléments de l'ensemble de la figure 1, dans une deuxième configuration ;
- la figure 3 est une vue partielle, en perspective, d'un ensemble d'interconnexion selon un deuxième mode de réalisation de l'invention, dans une première configuration ; et
- la figure 4 est une vue latérale d'éléments de l'ensemble de la figure 3, dans une deuxième configuration.

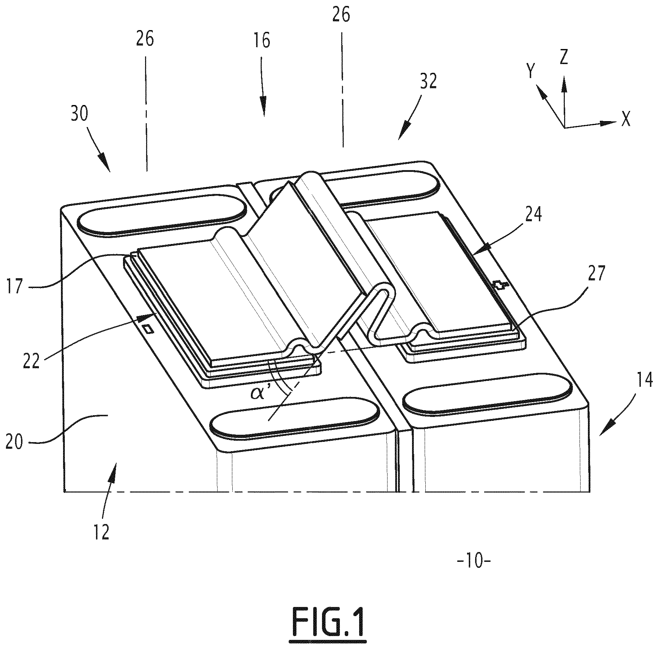

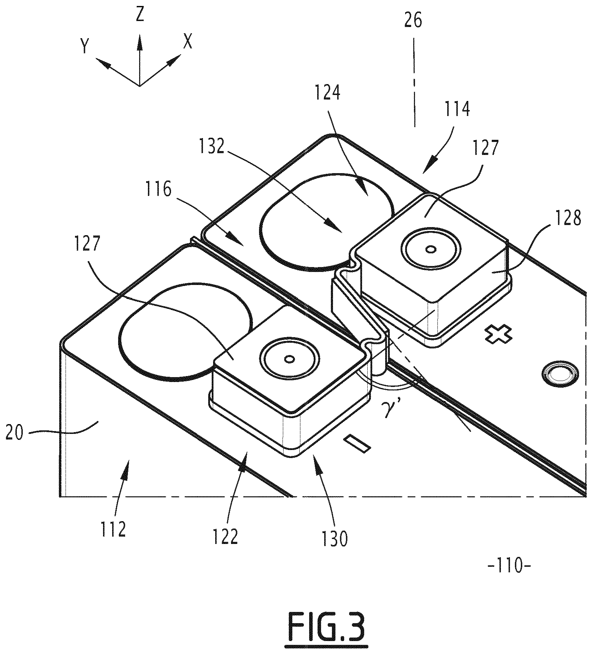

Les figures 1 et 3 représentent des ensembles 10 et 110 d'interconnexion, respectivement selon un premier et un deuxième modes de réalisation de l'invention.

Les ensembles 10 et 110 seront décrits simultanément ci-après, les éléments communs étant désignés par les mêmes numéros de référence.

L'ensemble 10, 110 d'interconnexion comporte une première 12, 112 et une deuxième 14, 114 cellules électrochimiques et un dispositif d'interconnexion 16, 116.

Le dispositif d'interconnexion 16, 116 est destiné à mettre en connexion électrique les première 12, 112 et deuxième 14, 114 cellules, comme il sera décrit ci-après. A cet effet, ledit dispositif d'interconnexion est formé d'un ou de plusieurs matériaux électriquement conducteurs, préférentiellement métalliques. Le dispositif d'interconnexion est par exemple réalisé en aluminium.

A titre indicatif, un élément est considéré ici comme électriquement conducteur si sa conductivité électrique est supérieure à *σ* = 0.7 * 10⁶ S·m⁻¹.

D'une manière générale, l'invention est apte à mettre en connexion électrique une pluralité de cellules, notamment par un montage en série ou en parallèle.

Dans la suite de la description, il est considéré que les cellules de chaque ensemble 10, 110 sont identiques. Seule la première cellule 12, 112 sera décrite ci-après.

La cellule 12, 112 comprend une enveloppe externe 20 et au moins une première borne 22, 122 disposée sur l'enveloppe externe. Typiquement, la cellule 12, 112 comprend en outre une deuxième borne 24, 124, les première et deuxième bornes étant préférentiellement de polarités opposées. Il est considéré dans la présente description que la deuxième borne 24, 124 de chaque cellule a une forme similaire à la première borne 22, 122 de ladite cellule. Les deuxièmes bornes 24, 124 des deuxièmes cellules 14, 114 sont visibles respectivement sur la figure 1 et sur la figure 3.

La ou chaque borne 22, 24, 122, 124 s'étend selon un axe 26 et comporte une surface terminale 27, 127, sensiblement perpendiculaire audit axe 26.

Dans le mode de réalisation de la figure 1, la surface terminale 27 est plane et affleure sensiblement l'enveloppe externe 20. En d'autres termes, chaque borne 22, 24 forme une saillie faible ou nulle par rapport à l'enveloppe externe 20.

Dans le mode de réalisation de la figure 3, chaque borne 122, 124 forme une saillie par rapport à l'enveloppe externe 20 selon l'axe 26. Chacune desdites bornes 122, 124 comporte une surface latérale 128, parallèle audit axe 26.

Dans le mode de réalisation de la figure 3, la surface latérale 128 est cylindrique de section sensiblement carrée ou rectangulaire. En variante non représentée, la surface latérale est cylindrique de section polygonale non rectangulaire, ou encore de section circulaire ou oblongue. Plus généralement, la forme de la borne n'est pas limitée à celles représentées sur les figures.

Chacune des figures 1 et 3 montre l'un des ensembles 10, 110 dans une configuration installée dudit ensemble, correspondant éventuellement à une étape de montage d'un organe électrique de type module ou batterie, comme décrit ci-après. On considère une base orthonormée (X, Y, Z) associée à chaque ensemble 10, 110.

Dans la configuration installée, les première 12, 112 et deuxième 14, 114 cellules sont disposées côte à côte de sorte que la première borne 22, 122 de la première cellule et la deuxième borne 24, 124 de la deuxième cellule soient à proximité et en regard l'une de l'autre, les axes 26 desdites bornes étant sensiblement parallèles.

Dans les modes de réalisation représentés, on considère que les première et deuxième cellules sont alignées selon X et que les axes 26 sont parallèles à Z.

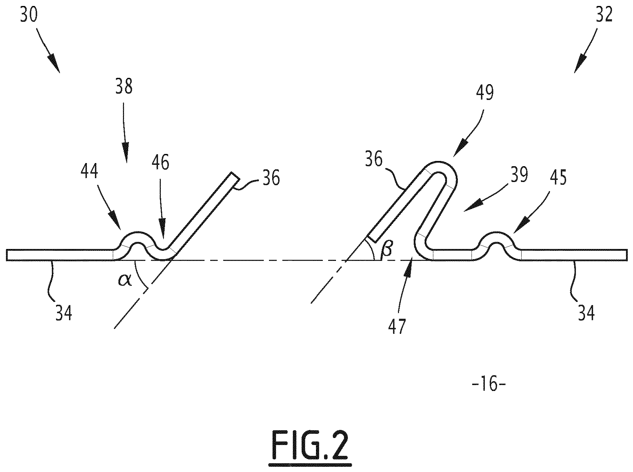

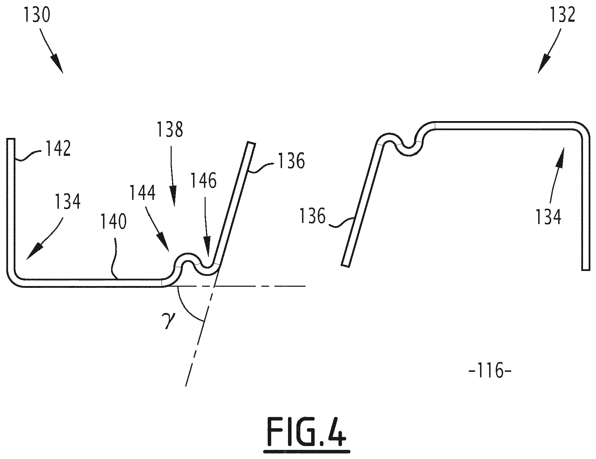

Le dispositif 16, 116 d'interconnexion va à présent être décrit. Chacune des figures 2 et 4 montre une vue de profil de l'un des dispositif 16, 116 d'interconnexion dans une configuration dissociée.

Le dispositif 16, 116 d'interconnexion comprend un premier 30, 130 et un deuxième 32, 132 éléments d'interconnexion. Dans le mode de réalisation des figures 1 et 2, les premier 30 et deuxième 32 éléments d'interconnexion sont de formes différentes. Dans le mode de réalisation des figures 3 et 4, les premier 130 et deuxième 132 éléments d'interconnexion sont de forme identique.

Chacun des premier 30, 130 et deuxième 32, 132 éléments d'interconnexion comprend une surface de fixation 34, 134 et une surface de contact 36, 136 reliées l'une à l'autre. Dans les modes de réalisation représentés, chacun des éléments d'interconnexion comprend en outre une zone de liaison 38, 39, 138 interposée entre les surfaces de fixation 34, 134 et de contact 36, 136.

Plus précisément, dans les modes de réalisation représentés, chaque élément d'interconnexion 30, 32, 130, 132 est formé d'une bande métallique, par exemple réalisée en aluminium. Les surfaces de fixation 34, 134 et de contact 36, 136 d'un même élément d'interconnexion sont disposées aux extrémités de ladite bande métallique, de part et d'autre de la zone de liaison 38, 39, 138.

Dans l'exemple des figures 1 et 2, chaque surface de fixation 34 est plane. Dans l'exemple des figures 3 et 4, chaque surface de fixation 134 comprend une portion centrale 140 plane et une portion d'extrémité 142 plane. La portion centrale 140 est disposée entre la portion d'extrémité 142 et la zone de liaison 138. Dans la configuration dissociée de la figure 4, les portions centrale 140 et d'extrémité 142 forment un angle de 90° environ.

Dans les modes de réalisation représentés, chaque surface de contact 36, 136 est plane et inclinée par rapport à la surface de fixation 34, 134. Dans l'exemple des figures 3 et 4, on considère l'inclinaison de la surface de contact 136 avec la portion centrale 140 de la surface de fixation 134.

Les surfaces de fixation 34 et de contact 36 du premier élément d'interconnexion 30 de l'ensemble 10 sont situées sur une même face de la bande métallique formant ledit premier élément. Au contraire, les surfaces de fixation 34 et de contact 36 du deuxième élément d'interconnexion 32 de l'ensemble 10 sont situées sur des faces opposées de la bande métallique formant ledit deuxième élément. De même, les surfaces de fixation 134 et de contact 136 de chacun des premier et deuxième éléments d'interconnexion 130, 132 de l'ensemble 110 sont situées sur des faces opposées de la bande métallique formant chacun desdits éléments. Cependant, pour des raisons d'homogénéité de la description, on considère ici que l'angle d'inclinaison entre les surfaces de fixation et de contact est un angle aigu, c'est-à-dire compris entre 0° et 90°.

Dans la configuration dissociée de la figure 2, chaque surface de contact 36 est inclinée par rapport à la surface de fixation 34 correspondante selon un angle dit non contraint. Plus précisément, dans la configuration dissociée, le premier élément d'interconnexion 30 de l'ensemble 10 présente un premier angle α entre les surfaces de fixation 34 et de contact 36 ; et le deuxième élément d'interconnexion 32 présente un deuxième angle β entre les surfaces de fixation 34 et de contact 36. Chacun des premier et deuxième angles α, β est compris entre 45° et 85°. Les premier et deuxième angles peuvent être identiques ou différents. Dans l'exemple de la figure 2, le premier angle est supérieur au deuxième angle.

De même, dans la configuration dissociée de la figure 4, chacun des premier et deuxième élément d'interconnexion 130, 132 de l'ensemble 110 présente un angle γ dit non contraint entre la portion centrale 140 de la surface de fixation 134 et la surface de contact 136. L'angle γ est compris entre 45° et 85°.

La zone de liaison 38, 39, 138 comporte au moins une première 44, 45, 144 et une deuxième 46, 47, 146 parties, alignées l'une avec l'autre, les première et deuxième parties étant disposées respectivement proche de la surface de fixation 34, 134 et proche de la surface de contact 36, 136. Comme visible sur les figures 1 à 4, chacune des première et deuxième parties a une forme recourbée, les concavités desdites première et deuxième parties étant orientées vers des faces opposées du premier 30, 130 ou du deuxième 32, 132 élément d'interconnexion correspondant.

De manière optionnelle, la zone de liaison comporte davantage de variations de concavités entre les surfaces de fixation et de contact. Par exemple, le deuxième élément d'interconnexion 32 de l'ensemble 10 comprend une troisième partie 49 recourbée, disposée entre la deuxième partie 47 et la surface de contact 36, dont la concavité est orientée vers la même face que la première partie 45.

Le dispositif 16 d'interconnexion des figures 1 et 2 et l'ensemble 10 de la figure 1 vont à présent être décrits plus précisément.

La surface de fixation 34 d'au moins l'un des premier 30 et deuxième 32 éléments d'interconnexion est configurée pour épouser la surface terminale 27 d'une borne 22, 24 de la première 12 ou de la deuxième 14 cellule dans la configuration installée de l'ensemble 10. Dans l'exemple de la figure 1, dans la configuration installée, le premier élément d'interconnexion 30 est fixé à la première borne 22 de la première cellule 12, la surface de fixation 34 dudit premier élément d'interconnexion épousant la surface terminale 27 de ladite première borne 22 ; et le deuxième élément d'interconnexion 32 est fixé à la deuxième borne 24 de la deuxième cellule 14, la surface de fixation 34 dudit deuxième élément d'interconnexion épousant la surface terminale 27 de ladite deuxième borne 24.

Dans la configuration installée de la figure 1, chacune des surfaces de fixation 34 des premier et deuxième élément d'interconnexion 30, 32 s'étend donc sensiblement selon un plan (X, Y).

Par ailleurs, dans la configuration installée de la figure 1, les surfaces de contact 36 des premier et deuxième élément d'interconnexion 30, 32 sont au contact l'une de l'autre, chacune desdites surfaces de contact exerçant sur l'autre surface de contact un effort orienté selon X. En raison de cet effort, dans la configuration installée, chaque surface de contact 36 est inclinée selon un même angle α', dit angle contraint, par rapport à la surface de fixation. L'angle α' est supérieur ou égal et de préférence strictement supérieur à chacun des premier angle α et deuxième angle β de la configuration dissociée de la figure 2. Par « strictement supérieur », on entend que l'angle α' est plus proche de 90° que chacun des premier angle α et deuxième angle β.

Le dispositif 116 d'interconnexion des figures 3 et 4 et l'ensemble 110 de la figure 3 vont à présent être décrits plus précisément.

La surface de fixation 134 d'au moins l'un des premier 130 et deuxième 132 éléments d'interconnexion est configurée pour épouser la surface latérale 128 d'une borne 122, 124 de la première 112 ou de la deuxième 114 cellule dans la configuration installée de l'ensemble 110. Dans l'exemple de la figure 3, dans la configuration installée, le premier élément d'interconnexion 130 est fixé à la première borne 122 de la première cellule 112, la surface de fixation 134 dudit premier élément d'interconnexion épousant la surface latérale 128 de ladite première borne 122 ; et le deuxième élément d'interconnexion 132 est fixé à la deuxième borne 124 de la deuxième cellule 114, la surface de fixation 134 dudit deuxième élément d'interconnexion épousant la surface latérale 128 de ladite deuxième borne 124.

Plus précisément, la portion centrale 140 et la portion d'extrémité 142 de chaque surface de fixation 134 épousent respectivement une face située dans un plan (X, Z) et une face située dans un plan (Y, Z) de la surface latérale 128 correspondante.

Par ailleurs, dans la configuration installée de la figure 3, les surfaces de contact 136 des premier et deuxième élément d'interconnexion 130, 132 sont au contact l'une de l'autre, chacune desdites surfaces de contact exerçant sur l'autre surface de contact un effort orienté selon X. En raison de cet effort, dans la configuration installée, chaque surface de contact 136 est inclinée selon un même angle γ', dit angle contraint, par rapport à la surface de fixation. L'angle γ' est supérieur ou égal et de préférence strictement supérieur à l'angle γ de la configuration dissociée de la figure 4. Par « strictement supérieur », on entend que l'angle γ' est plus proche de 90° que l'angle γ.

Un procédé d'assemblage de l'ensemble 10, 110 d'interconnexion décrit ci-dessus va maintenant être décrit.

Le procédé concerne la réalisation d'un organe électrique de type module, pack ou batterie électrique. Un tel organe électrique comprend une pluralité de cellules 12, 14, 112, 114, reliées deux à deux en série ou en parallèle par une pluralité de dispositifs 16, 116 d'interconnexion.

Une première étape dudit procédé consiste à fixer chaque premier 30, 130 et chaque deuxième 32, 132 élément d'interconnexion à une borne 22, 24, 122, 124 de cellule.

En particulier, la surface de fixation 34, 134 du premier élément d'interconnexion 30, 130 décrit ci-dessus est fixée à la première borne 22, 122 de la première cellule 12, 112 décrite ci-dessus ; et la surface de fixation 34, 134 du deuxième élément d'interconnexion 32, 132 décrit ci-dessus est fixée à la deuxième borne 24, 124 de la deuxième cellule 14, 114 décrite ci-dessus.

Dans le cas de l'ensemble 10 de la figure 1, chaque surface de fixation 34 est fixée à la surface terminale 27 de la borne correspondante. Dans le cas de l'ensemble 110 de la figure 3, chaque surface de fixation 134 est fixée à la surface latérale 128 de la borne correspondante.

La fixation est par exemple réalisée par soudage ou brasage, avant l'assemblage des cellules entre elles. Il est ainsi possible de prévoir un environnement adapté au soudage ou au brasage pour la première étape du procédé.

D'autres solutions de fixation sont envisageables, par exemple, une fixation par clippage de la surface de fixation 134 sur la surface latérale 128 de la borne correspondante.

De préférence, pour des cellules 12, 14, 112, 114 comprenant chacune deux bornes, chaque borne des cellules destinées à être assemblées pour réaliser l'organe électrique est équipée d'un premier 30, 130 ou d'un second 32, 132 élément d'un dispositif 16, 116 d'interconnexion.

Une deuxième étape dudit procédé consiste à assembler entre elles les cellules ainsi équipées d'éléments d'interconnexion, pour réaliser l'organe électrique. Cette deuxième étape peut être effectuée sur un autre site que la première étape précédemment décrite.

En particulier, les première 12, 112 et deuxième 14, 114 cellules sont placées en vis-à-vis, la première borne 22, 122 de la première cellule étant alignée selon X avec la deuxième borne 24, 124 de la deuxième cellule. Les première et deuxième cellules sont ensuite rapprochées l'une de l'autre de sorte que les surfaces de contact 36, 136 des premiers 30, 130 et deuxième 32, 132 éléments d'interconnexion entrent en contact l'une avec l'autre. Le rapprochement selon X est poursuivi de sorte à appliquer un effort de l'une des surfaces de contact 36, 136 sur l'autre. La forme à multiple courbure de la zone de liaison 38, 39, 138 permet un effet ressort : ladite zone de liaison se déforme élastiquement, modifiant l'inclinaison entre la zone de contact 36, 136 et la zone de fixation correspondante. De préférence, sous contrainte mécanique, l'angle d'inclinaison α', γ' se rapproche ainsi de 90°.

La déformation élastique de la zone de liaison 38, 39, 138 permet aux surfaces de contact 36, 136 d'être plaquées l'une contre l'autre avec un effort selon X, assurant ainsi un bon contact électrique entre les première 12, 112 et deuxième 14, 114 cellules. La flexibilité de l'assemblage permet un contact électrique en toutes circonstances.

Les dimensions des éléments d'interconnexion, notamment leur épaisseur, permettent de moduler l'effort selon X et la tenue mécanique de l'ensemble, pour optimiser la transmission électrique.

L'étape d'assemblage de deux cellules est répétée, de sorte à assembler en série et/ou en parallèle une pluralité de cellules équipées d'éléments d'interconnexion.

Les enveloppes externes 20 des cellules sont ensuite solidarisées entre elles pour maintenir l'effort appliqué entre les éléments d'interconnexion.

Un organe électrique de type module ou batterie est ainsi obtenu.

Une telle étape d'assemblage des cellules est facile à réaliser ; les cellules peuvent en outre être facilement dissociées si l'une desdites cellules de l'organe électrique doit être remplacée.

**Nomenclature :**

| **Référence** | **Elément correspondant** |
|---|---|
| 10, 110 | Ensemble d'interconnexion |
| 12, 112 | Première cellule |
| 14, 114 | Deuxième cellule |
| 16, 116 | Dispositif d'interconnexion |
| 20 | Enveloppe externe |
| 22, 122 | Première borne |
| 24, 124 | Deuxième borne |
| 26 | Axe de la borne |
| 27, 127 | Surface terminale de la borne |
| 128 | Surface latérale de la borne |
| 30, 130 | Premier élément d'interconnexion du dispositif d'interconnexion |
| 32, 132 | Deuxième élément d'interconnexion du dispositif d'interconnexion |
| 34, 134 | Surface de fixation d'un élément d'interconnexion |
| 36, 136 | Surface de contact d'un élément d'interconnexion |
| 38, 39, 138 | Zone de liaison d'un élément d'interconnexion |
| 140 | Portion centrale de la zone de liaison 138 |
| 142 | Portion d'extrémité de la zone de liaison 138 |
| 44, 45, 144 | Première partie de la zone de liaison |
| 46, 47, 146 | Deuxième partie de la zone de liaison |
| 49 | Troisième partie de la zone de liaison 39 |

## Revendications

1. Ensemble (10, 110) d'interconnexion de cellules électrochimiques pour véhicule électrique ou hybride, ledit ensemble comprenant une première (12, 112) et une deuxième (14, 114) cellules électrochimiques, chacune desdites première et deuxième cellules comprenant une enveloppe externe (20) et au moins une borne (22, 24, 122, 124) disposée à l'extérieur de l'enveloppe externe selon un axe ;
ledit ensemble comprenant en outre un dispositif (16, 116) d'interconnexion, comportant un premier (30, 130) et un deuxième (32, 132) éléments d'interconnexion ; chacun desdits premier et deuxième éléments d'interconnexion comprenant une surface de fixation (34, 134) et une surface de contact (36, 136),
la surface de fixation de chacun des premier et deuxième éléments d'interconnexion étant apte à être fixée à la borne (22, 24, 122, 124), respectivement de la première et de la deuxième cellules, dans une configuration installée de l'ensemble d'interconnexion ; de sorte que, dans ladite configuration installée, les surfaces de contact (36, 136) des premier et deuxième éléments d'interconnexion exercent l'une sur l'autre un effort selon une direction d'assemblage (X) des première et deuxième cellules, la direction d'assemblage étant sensiblement perpendiculaire à l'axe de l'au moins une borne, le dispositif d'interconnexion assurant ainsi une connexion électrique entre les première et deuxième cellules, la connexion électrique n'étant assurée que par l'effort entre les surfaces de contact;
l'ensemble d'interconnexion étant **caractérisé en ce que**: les surfaces de contact étant configurées de sorte que, dans ladite configuration installée, lesdites surfaces de contact soient sensiblement disposées dans un plan formant un angle (α', γ') contraint avec ladite direction d'assemblage, ledit angle contraint étant compris entre 45° et 85° : l'un des premier et deuxième éléments d'interconnexion comprend en outre une zone de liaison (38, 39, 138), disposée entre la surface de fixation et la surface de contact, ladite zone de liaison comprenant une première (44, 45, 144) et une deuxième (46, 47, 146) parties recourbées consécutives, les première et deuxième parties présentant des concavités opposées l'une à l'autre.

2. Ensemble (10) d'interconnexion selon la revendication 1, dans lequel la zone de liaison (39) de l'au moins un (32) des premier et deuxième éléments d'interconnexion comprend en outre une troisième partie (49) recourbée, consécutive à la deuxième partie, les deuxième et troisième parties présentant des concavités opposées l'une à l'autre.

3. Ensemble (10) d'interconnexion selon l'une des revendications précédentes, dans lequel : la borne (22, 24) d'au moins l'une des première et deuxième cellules présente une surface terminale (27) sensiblement perpendiculaire à l'axe ; et la surface de fixation (34) d'au moins l'un des premier et deuxième éléments d'interconnexion est configurée pour épouser ladite surface terminale dans la configuration installée.

4. Ensemble (110) d'interconnexion selon l'une des revendications précédentes, dans lequel : la borne d'au moins l'une des première et deuxième cellules forme une saillie par rapport à l'enveloppe externe selon l'axe et comprend une surface latérale (128), parallèle audit axe ; et la surface de fixation (134) d'au moins l'un des premier et deuxième éléments d'interconnexion est configurée pour épouser ladite surface latérale dans la configuration installée.

5. Ensemble (10, 110) d'interconnexion selon l'une des revendications précédentes, dans lequel, dans une configuration dissociée dudit ensemble, en l'absence d'effort entre les premier et deuxième éléments d'interconnexion, chaque surface de contact (36, 136) est sensiblement disposée dans un plan formant un angle (α, β, γ) non contraint avec la surface de fixation (34, 134) correspondante, ledit angle non contraint étant compris entre 45° et 85°, ledit angle non contraint étant inférieur ou égal à l'angle contraint (α', γ').

6. Procédé d'assemblage de l'ensemble (10, 110) d'interconnexion selon l'une des revendications précédentes, comprenant les étapes suivantes : fixation de la surface de fixation (34, 134) de chacun des premier (30, 130) et deuxième (32, 132) éléments d'interconnexion du dispositif d'interconnexion, à la borne (22, 24, 122, 124), respectivement de la première et de la deuxième cellules ; puis rapprochement des première et deuxième cellules selon la direction d'assemblage (X), de sorte que les surfaces de contact (36, 136) des premier et deuxième éléments d'interconnexion entrent en contact et exercent l'une sur l'autre un effort selon la direction d'assemblage (X).

7. Procédé d'assemblage selon la revendication 6, dans lequel l'effort entre les surfaces de contact induit une déformation élastique de la zone de liaison (38, 39, 138) de l'au moins un des premier et deuxième éléments d'interconnexion.

8. Procédé selon la revendication 6 ou 7, dans lequel la fixation de la surface de fixation (34, 134) sur la borne est effectuée par soudage ou brasage.

9. Organe électrique comprenant : une première (12, 112) et une deuxième (14, 114) cellules électrochimiques ; et un dispositif (16, 116) d'interconnexion ; chacune desdites première et deuxième cellules comprenant une enveloppe externe (20) et une borne (22, 24, 122, 124) disposée à l'extérieur de l'enveloppe externe selon un axe ;
le dispositif (16, 116) d'interconnexion, comportant un premier (30, 130) et un deuxième (32, 132) éléments d'interconnexion ; chacun desdits premier et deuxième éléments d'interconnexion comprenant une surface de fixation (34, 134) et une surface de contact (36, 136),
la surface de fixation de chacun des premier et deuxième éléments d'interconnexion étant fixée à la borne (22, 24, 122, 124), respectivement de la première et de la deuxième cellules ; les surfaces de contact (36, 136) des premier et deuxième éléments d'interconnexion exerçant l'une sur l'autre un effort selon une direction d'assemblage (X) des première et deuxième cellules, la direction d'assemblage étant sensiblement perpendiculaire à l'axe de la borne, le dispositif d'interconnexion assurant ainsi une connexion électrique entre les première et deuxième cellules ;
les surfaces de contact étant sensiblement disposées dans un plan formant un angle (α', γ') contraint avec ladite direction d'assemblage, ledit angle contraint étant compris entre 45° et 85° ;
l'organe électrique étant susceptible d'être issu d'un procédé d'assemblage, selon l'une des revendications 6 à 8, d'un ensemble selon l'une des revendications 1 à 5.

## Patentansprüche

1. Verbindungsanordnung (10, 110) elektrochemischer Zellen für ein Elektro- oder Hybridfahrzeug, die Anordnung umfassend eine erste (12, 112) und eine zweite (14, 114) elektrochemische Zelle, jede dieser Zellen umfassend eine äußere Hülle (20) und mindestens einen Anschluss (22, 24, 122, 124), der entlang einer Achse außerhalb der äußeren Hülle angeordnet ist;
die Anordnung ferner umfassend eine Verbindungsvorrichtung (16, 116), die ein erstes (30, 130) und ein zweites (32, 132) Verbindungselement aufweist; jedes von dem ersten und dem zweiten Verbindungselement umfassend eine Befestigungsfläche (34, 134) und eine Kontaktfläche (36, 136),
wobei die Befestigungsfläche von jedem von dem ersten und dem zweiten Verbindungselement geeignet ist, um in einer installierten Konfiguration der Verbindungsanordnung an dem Anschluss (22, 24, 122, 124) jeweils der ersten und der zweiten Zelle befestigt zu werden; sodass in der installierten Konfiguration die Kontaktflächen (36, 136) des ersten und des zweiten Verbindungselements eine Kraft entlang einer Montagerichtung (X) der ersten und der zweiten Zelle aufeinander ausüben, wobei die Montagerichtung im Wesentlichen senkrecht zur Achse des mindestens einen Anschlusses ist, wodurch die Verbindungsvorrichtung eine elektrische Verbindung zwischen der ersten und der zweiten Zelle gewährleistet, wobei die elektrische Verbindung nur durch die Kraft zwischen den Kontaktflächen gewährleistet wird;
wobei die Verbindungsanordnung **dadurch gekennzeichnet ist, dass**:
die Kontaktflächen konfiguriert sind, sodass die Kontaktflächen in der installierten Konfiguration im Wesentlichen in einer Ebene angeordnet sind, die einen engen Winkel (α', γ') mit der Montagerichtung bildet, wobei der enge Winkel zwischen 45° und 85° liegt;
eines von dem ersten und dem zweiten Verbindungselement ferner einen Verbindungsbereich (38, 39, 138) umfasst, der zwischen der Befestigungsfläche und der Kontaktfläche angeordnet ist, der Verbindungsbereich umfassend einen ersten (44, 45, 144) und einen zweiten (46, 47, 146) aufeinanderfolgenden gebogenen Abschnitt, wobei der erste und der zweite Abschnitt einander gegenüberliegende Konkavitäten aufweisen.

2. Verbindungsanordnung (10) nach Anspruch 1, wobei der Verbindungsbereich (39) von mindestens einem (32) von dem ersten und dem zweiten Verbindungselement ferner einen dritten gebogenen Abschnitt (49) umfasst, der auf den zweiten Abschnitt folgt, wobei der zweite und der dritte Abschnitt einander entgegengesetzte Konkavitäten aufweisen.

3. Verbindungsanordnung (10) nach einem der vorherigen Ansprüche, wobei: der Anschluss (22, 24) von mindestens einer von der ersten und der zweiten Zelle eine Endfläche (27) aufweist, die im Wesentlichen senkrecht zur Achse ist; und die Befestigungsfläche (34) von mindestens einem von dem ersten und dem zweiten Verbindungselement konfiguriert ist, um sich in der installierten Konfiguration an die Endfläche anzupassen.

4. Verbindungsanordnung (110) nach einem der vorherigen Ansprüche, wobei: der Anschluss von mindestens einer von der ersten und der zweiten Zelle einen Vorsprung von der äußeren Hülle entlang der Achse bildet und eine Seitenfläche (128) umfasst, die parallel zur Achse ist; und die Befestigungsfläche (134) von mindestens einem von dem ersten und dem zweiten Verbindungselement konfiguriert ist, um sich in der installierten Konfiguration an die Seitenfläche anzupassen.

5. Verbindungsanordnung (10, 110) nach einem der vorherigen Ansprüche, wobei in einer getrennten Konfiguration der Anordnung bei fehlender Kraft zwischen dem ersten und dem zweiten Verbindungselement jede Kontaktfläche (36, 136) im Wesentlichen in einer Ebene angeordnet ist, die einen nicht festgelegten Winkel (α, ß, γ) mit der entsprechenden Befestigungsfläche (34, 134) bildet, wobei der nicht festgelegte Winkel zwischen 45° und 85° liegt, wobei der nicht festgelegte Winkel kleiner oder gleich dem festgelegten Winkel (α', γ') ist.

6. Montageverfahren der Verbindungsanordnung (10, 110) nach einem der vorherigen Ansprüche, umfassend die folgenden Schritte: Befestigen der Befestigungsfläche (34, 134) von jedem von dem ersten (30, 130) und dem zweiten (32, 132) Verbindungselement der Verbindungsanordnung an dem Anschluss (22, 24, 122, 124) jeweils der ersten und der zweiten Zelle; dann Annähern der ersten und der zweiten Zelle in der Verbindungsrichtung (X), sodass die Kontaktflächen (36, 136) des ersten und des zweiten Verbindungselements in Kontakt kommen und eine Kraft in der Verbindungsrichtung (X) aufeinander ausüben.

7. Montageverfahren nach Anspruch 6, wobei die Kraft zwischen den Kontaktflächen eine elastische Verformung des Verbindungsbereichs (38, 39, 138) an mindestens einem von dem ersten und dem zweiten Verbindungselement verursacht.

8. Verfahren nach Anspruch 6 oder 7, wobei die Befestigung der Befestigungsfläche (34, 134) an dem Anschluss durch Schweißen oder Löten erfolgt.

9. Elektrisches Organ, umfassend: eine erste (12, 112) und eine zweite (14, 114) elektrochemische Zelle; und eine Verbindungsvorrichtung (16, 116); jede von der ersten und der zweiten Zelle umfassend eine äußere Hülle (20) und einen Anschluss (22, 24, 122, 124), der entlang einer Achse außerhalb der äußeren Hülle angeordnet ist;
wobei die Verbindungsvorrichtung (16, 116) ein erstes (30, 130) und ein zweites (32, 132) Verbindungselement aufweist; jedes von dem ersten und dem zweiten Verbindungselement umfassend eine Befestigungsfläche (34, 134) und eine Kontaktfläche (36, 136),
die Befestigungsfläche von jedem von dem ersten und dem zweiten Verbindungselement an dem Anschluss (22, 24, 122, 124) jeweils der ersten und der zweiten Zelle befestigt ist; die Kontaktflächen (36, 136) des ersten und des zweiten Verbindungselements aufeinander eine Kraft in einer Montagerichtung (X) jeweils der ersten und der zweiten Zelle ausüben, wobei die Montagerichtung im Wesentlichen senkrecht zur Achse des Anschlusses ist; die Verbindungsvorrichtung somit eine elektrische Verbindung zwischen der ersten und zweiten Zelle gewährleistet;
die Kontaktflächen im Wesentlichen in einer Ebene angeordnet sind, die einen festgelegten Winkel (α', γ') mit der Montagerichtung bildet; der festgelegte Winkel zwischen 45° und 85° ist:
wobei das elektrische Organ aus einem Montageverfahren nach einem der Ansprüche 6 bis 8 einer Anordnung nach einem der Ansprüche 1 bis 5 hervorgehen kann.

## Claims

1. Assembly (10, 110) for interconnecting electrochemical cells for an electric or hybrid vehicle, said assembly comprising a first (12, 112) and a second (14, 114) electrochemical cells, each of said first and second cells comprising an outer casing (20) and at least one terminal (22, 24, 122, 124) arranged outside the outer casing along an axis;
said assembly further comprising an interconnection device (16, 116), including a first (30, 130) and a second (32, 132) interconnection element; each of said first and second interconnection elements comprising a mounting surface (34, 134) and a contact surface (36, 136),
the mounting surface of each of the first and second interconnection elements being configured to be attached to the terminal (22, 24, 122, 124) of the first and second cells, respectively, in an installed configuration of the interconnection assembly; such that, in said installed configuration, the contact surfaces (36, 136) of the first and second interconnection elements apply a force to each other along an assembly direction (X) of the first and second cells, the assembly direction being substantially perpendicular to the axis of the at least one terminal, the interconnection device thereby providing an electrical connection between the first and second cells, the electrical connection being provided solely by the force between the contact surfaces;
the interconnection assembly being **characterised in that**:
the contact surfaces are configured such that, in said installed configuration, said contact surfaces are substantially arranged in a plane forming a constrained angle (α', γ') with said assembly direction, the constrained angle being between 45° and 85°:
one of the first and second interconnection elements further comprises a connecting region (38, 39, 138), located between the mounting surface and the contact surface, said connecting region comprising a first (44, 45, 144) and a second (46, 47, 146) consecutive curved portions, the first and second portions having concavities opposite each other.

2. Interconnection assembly (10) according to claim 1, wherein the connecting region (39) of at least one (32) of the first and second interconnection elements further comprises a third curved portion (49), consecutive to the second portion, the second and third portions having concavities opposite each other.

3. Interconnection assembly (10) according to any one of the preceding claims, wherein: the terminal (22, 24) of at least one of the first and second cells has a terminal surface (27) substantially perpendicular to the axis; and the mounting surface (34) of at least one of the first and second interconnection elements is configured to engage said terminal surface in the installed configuration.

4. Interconnection assembly (110) according to any one of the preceding claims, wherein: the terminal of at least one of the first and second cells projects from the outer casing along the axis and comprises a lateral surface (128) parallel to said axis; and the mounting surface (134) of at least one of the first and second interconnection elements is configured to engage said lateral surface in the installed configuration.

5. Interconnection assembly (10, 110) according to any one of the preceding claims, wherein, in a separated configuration of said assembly, in the absence of force between the first and second interconnection elements, each contact surface (36, 136) is substantially arranged in a plane forming an unconstrained angle (α, β, γ) with the corresponding mounting surface (34, 134), said unconstrained angle being between 45° and 85°, the unconstrained angle being less than or equal to the constrained angle (α', γ').

6. Method for assembling the interconnection assembly (10, 110) according to any one of the preceding claims, comprising the following steps: attaching the mounting surface (34, 134) of each of the first (30, 130) and second (32, 132) interconnection elements of the interconnection device to the terminal (22, 24, 122, 124) of the first and second cells, respectively; and then bringing the first and second cells together along the assembly direction (X), such that the contact surfaces (36, 136) of the first and second interconnection elements come into contact and apply a force to each other along the assembly direction (X).

7. Assembly method according to claim 6, wherein the force between the contact surfaces induces elastic deformation of the connecting region (38, 39, 138) of at least one of the first and second interconnection elements.

8. Method according to claim 6 or 7, wherein the attachment of the mounting surface (34, 134) to the terminal is carried out by welding or brazing.

9. Electrical device comprising: a first (12, 112) and a second (14, 114) electrochemical cell; and an interconnection device (16, 116); each of said first and second cells comprising an outer casing (20) and a terminal (22, 24, 122, 124) arranged outside the outer casing along an axis;
the interconnection device (16, 116) comprising a first (30, 130) and a second (32, 132) interconnection element; each of said first and second interconnection elements comprising a mounting surface (34, 134) and a contact surface (36, 136),
the mounting surface of each of the first and second interconnection elements being attached to the terminal (22, 24, 122, 124) of the first and second cells, respectively; the contact surfaces (36, 136) of the first and second interconnection elements applying a force to each other along an assembly direction (X) of the first and second cells, the assembly direction being substantially perpendicular to the axis of the terminal, the interconnection device thereby providing an electrical connection between the first and second cells;
the contact surfaces being substantially arranged in a plane forming a constrained angle (α', γ') with said assembly direction, the constrained angle being between 45° and 85°:
the electrical device being capable of being produced by an assembly method according to any one of claims 6 to 8, of an assembly according to any one of claims 1 to 5.
